# EUROPEAN PATENT APPLICATION

(11) **EP 4 468 065 A1**
(43) Date of publication of application: **27.11.2024**
(21) Application number: 22910725.5
(22) Date of filing: 22.11.2022
(51) Int. Cl.: G02C 7/02, G02C 7/06

(54) **EYEGLASS LENS AND METHOD FOR DESIGNING EYEGLASS LENS**

(30) Priority: 21.12.2021 JP 2021207380
(71) Applicant: Hoya Lens Thailand Ltd., Pathumthani 12130 (TH)
(72) Inventor: MATSUOKA Shohei, Tokyo 160-8347 (JP)
(74) Representative: Betten & Resch
(86) International application number: PCT/JP2022/043212
(87) International publication number: WO 2023/120007

(57) **Abstract**

There is provided a spectacle lens, including: a base region that causes a light beam incident from an object-side surface to exit from an eyeball-side surface and converge to a predetermined position A on a retina through an eyeball; a plurality of defocus regions having a property of converging a light beam to a position B closer to an object side than the position A, or a position C closer to an opposite side of the position B as seen from the position A; and a transfer region provided at a boundary between the base region and the defocus region to gradually change a curvature between the base region and the defocus region.

## Description

### Technical Field

The present invention relates to a spectacle lens and a method for designing the spectacle lens.

### Description of related art

As a spectacle lens that suppresses a progression of refractive error such as myopia, there is a spectacle lens in which a plurality of island-shaped regions are formed on a lens, the island-shaped regions having a refractive power that is more positive than a prescribed refractive power (see Patent document 1, for example). The spectacle lens according to an embodiment described in Patent document 1 is also called a DIMS (Defocus Incorporated Multiple Segments) spectacle lens, abbreviated as DIMS. Hereinafter, these island-shaped regions are called defocus regions.

According to the spectacle lens having a configuration disclosed in Patent Document 1, the light beam that has passed through the island-shaped region is converged to a position in front of a retina, thereby suppressing the progression of myopia.

### Prior art document

### Patent document

Patent document 1: U.S. Application Publication No. 2017/0131567

### Summary of the invention

### Problem to be solved by the invention

DIMS spectacle lens is likely to have a lower contrast than a normal single-focal lens, due to the effect of a defocus region, while having the above-described advantage.

In order to solve the above-described problem, an object of one embodiment of the present invention is to provide a spectacle lens capable of improving a contrast compared to a known DIMS spectacle lens.

### Means for solving the problem

According to a first aspect of the present invention, there is provided a spectacle lens, including:
a base region that causes a light beam incident from an object-side surface to exit from an eyeball-side surface and converge to a predetermined position A on a retina through an eyeball;
a plurality of defocus regions having a property of converging a light beam to a position B closer to an object side than the position A, or a position C closer to an opposite side of the position B as seen from the position A; and
   a transfer region provided at a boundary between the base region and the defocus region to gradually change a curvature between the base region and the defocus region.

According to a second aspect of the present invention, there is provided the spectacle lens of the first aspect, wherein a width of the transfer region is 5.0% or more and 8.5% or less of a diameter of the defocus region.

According to a third aspect of the present invention, there is provided the spectacle lens of the first aspect or the second aspect, wherein at least a part of the transfer region is configured to gradually change the curvature between the base region and the defocus region by changing a sag amount of a lens base material.

According to a fourth aspect of the present invention, there is provided the spectacle lens of any one of the first to third aspects, wherein a sag amount Z at a midpoint in a width direction of the transfer region is 30% or more and 70% or less of an average value of a sag amount Z1 at a boundary between the base region and the transfer region, and a sag amount Z2 at a boundary between the transfer region and the defocus region.

According to a fifth aspect of the present invention, there is provided the spectacle lens of any one of the first to fourth aspects, wherein a spectacle lens is a lens that suppresses a progression of myopia.

According to a sixth aspect of the present invention, there is provided a method for designing a spectacle lens, the method including:
designing a base region that causes a light beam incident from an object-side surface to exit from an eyeball-side surface and converge to a predetermined position A on a retina through an eyeball;
designing a plurality of defocus regions having a property of converging a light beam to a position B closer to an object side than the position A, or a position C closer to an opposite side of the position B as seen from the position A; and
designing a transfer region provided at a boundary between the base region and the defocus region to gradually change a curvature between the base region and the defocus region.

### Advantage of the invention

According to one embodiment of the present invention, there is provided a spectacle lens that can improve a contrast while applying DIMS.

### Brief description of the drawings

FIG. 1 is a plan view of an object-side surface of a spectacle lens 100 according to a first embodiment of the present invention.
FIG. 2 is an enlarged sectional view around the defocus region 20 in the spectacle lens 100 according to the first embodiment of the present invention.
FIG. 3 is a graph showing a relationship between MTF and a width t of a transfer region 30 at each of light focusing positions of the base region 10 and the defocus region 20 (including the transfer region 30) of the spectacle lens 100 according to the first embodiment of the present invention.
FIG. 4 is an enlarged sectional view around the defocus region 20 of the spectacle lens 100 according to a second embodiment of the present invention.
FIG. 5(a) is a view illustrating a change in the sag amount around the defocus region 20 of Sample 1 according to the example of the present invention, and FIG. 5(b) is a view illustrating a change in the sag amount around the defocus region 20 of Sample 2 according to the example of the present invention.
FIG. 6 is an enlarged cross-sectional view around the defocus region 20 in the DIMS according to a reference example.

### Detailed description of the invention

### <Finding obtained by the inventor>

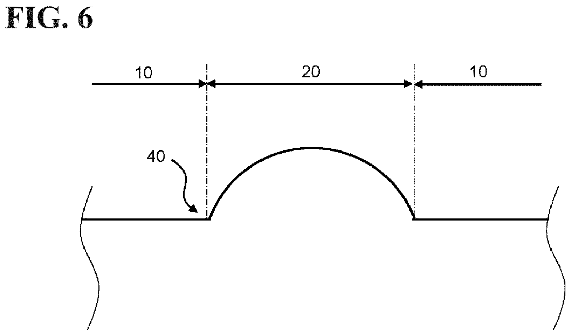

First, the finding obtained by the inventor will be explained. FIG. 6 is an enlarged cross-sectional view around the defocus region 20 in DIMS according to a reference example. In FIG. 6, the curvature of the base region 10 is subtracted and the base region 10 is shown as a plane for the sake of simplicity.

In the DIMS as illustrated in FIG. 6, the base region 10 and the defocus region 20 are designed in consideration of only geometric optical phenomena, resulting in a design in which the curvature changes discontinuously at a boundary 40 between the base region 10 and the defocus region 20. Therefore, there is a problem that a wave optical phenomenon (such as a diffraction effect) occurs at the boundary 40, involving a problem that a spot quality is degraded. Further, in the vicinity of the boundary 40, there is also a problem that when forming a functional film such as a hard coat film on a lens base material by coating or by other methods, liquid pools occur due to a film material, which is likely to cause a shape error during processing. In this specification, a spot means a light beam at an arbitrary position (light focusing position), and a spot quality means, for example, a level of a contrast at the light focusing position.

The inventor of the present invention has conducted extensive studies on the above-described problems, in consideration of a wave optical phenomenon. As a result, it is found that by providing a region (referred to as a transfer region 30 hereinafter) at the boundary 40 to gradually change the curvature between the base region 10 and the defocus region 20, the spot quality can be improved while improving ease of processing.

### [Details of embodiments of the present invention]

Next, one embodiment of the present invention will be described below with reference to the drawings. The present invention is not limited to these examples, but is indicated by the scope of the claims, and is intended to include all changes within the meaning and scope equivalent to the scope of the claims.

It is assumed that all contents not described in this specification are described in Patent Document 1. It is assumed that the contents not described in Patent Document 1 (particularly the contents related to the manufacturing method) are all described in WO2020/004551. If there is a discrepancy between the description in Patent Document 1 and the publication, the description in the publication shall take precedence.

The spectacle lens described in this specification has an object-side surface and an eyeball-side surface. The "object-side surface" is the surface located on the object side when spectacles with spectacle lenses are worn by a wearer, and the "eyeball-side surface" is the opposite, that is, the surface located on the eyeball side when spectacles with spectacle lenses are worn by a wearer. This relationship also applies to a lens base material that is a basis of the spectacle lens. That is, the lens base material also has an object-side surface and an eyeball-side surface.

### <First embodiment of the present invention> (1) Spectacle lens

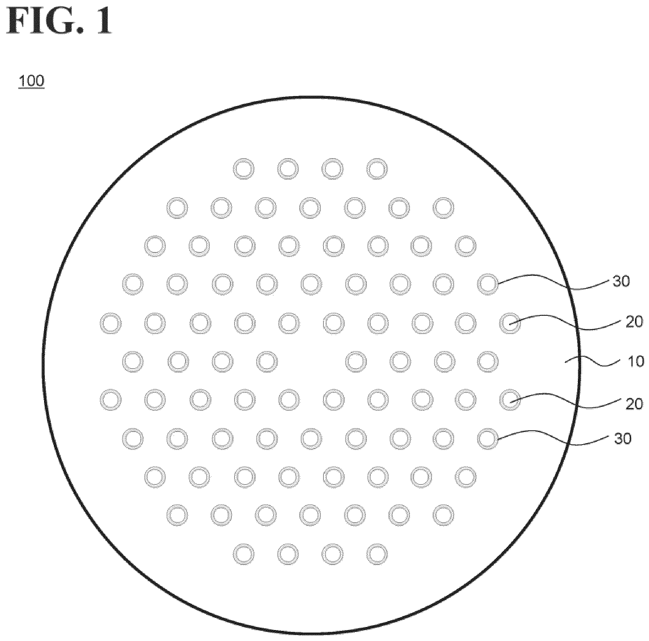

FIG. 1 is a plan view of the object-side surface of the spectacle lens 100 of this embodiment. The spectacle lens 100 of this embodiment includes a base region 10, a plurality of defocus regions 20, and a plurality of transfer regions 30. In this embodiment, the base region 10 is a refractive region designed to reflect a prescribed refractive power of the wearer, and designed so that the light beam incident from the object-side surface is emitted from the eyeball-side surface and converged to a predetermined position (position A) on a retina through a wearer's eyeball. In this embodiment, the defocus region 20 is configured to have a property of causing the light beam incident from the object-side surface to exit from the eyeball-side surface, to be converged to a position closer to the object side (position B) than position A, or to a position (position C) on the opposite side of position B as seen from position A, through the eyeball of the wearer. In this embodiment, the transfer region 30 is provided at a boundary between the base region 10 and the defocus region 20, and is arranged to surround each defocus region 20.

The base region 10 is a portion having a shape that can realize a prescribed refractive power of the wearer, corresponding to the first refractive region of Patent document 1. The surface shape of base region 10 is not particularly limited. The base region 10 may have a spherical shape, an aspherical shape, a toric surface shape, or a mixture thereof. This embodiment shows a case where the base region 10 has a spherical shape.

The defocus region 20 is a region at least a part of which does not allow an image caused by the base region 10 to be converged to a light focusing position. The defocus regions 20 are portions corresponding to the minute protrusions of Patent document 1. The spectacle lens 100 of this embodiment is a myopia progression suppressing lens, similarly to the spectacle lens described in Patent document 1. The plurality of defocus regions 20 of this embodiment may be formed on at least one of the object-side surface or the eyeball-side surface of the spectacle lens 100, similarly to the minute protrusions of Patent document 1. For example, this embodiment provides a case where a plurality of defocus regions 20 are provided only on the object-side surface of the spectacle lens 100.

The surface shape of the defocus region 20 is not particularly limited. The defocus region 20 may have a spherical shape, an aspherical shape, a toric surface shape, or a mixed shape thereof. For example, this embodiment provides a case where the defocus region 20 has a spherical shape.

The number of the plurality of defocus regions 20 included in the spectacle lens 100 is not particularly limited, but is, for example, 20 or more and 500 or less.

The plurality of defocus regions 20 are arranged, for example, in island shapes (that is, separated from each other without adjacent each other). An arrangement mode of the plurality of defocus regions 20 is not particularly limited. For example, as shown in FIG. 1, this embodiment provides a case where each defocus region 20 is sparsely arranged independently so that the center of each defocus region 20 becomes the vertex of an equilateral triangle (hereinafter also referred to as an equilateral triangle arrangement). The plurality of defocus regions 20 may be arranged such that parts of each are in contact with each other.

As shown in FIG. 10 of Patent document 1, the defocus region 20 may be formed in the center portion of the spectacle lens 100, or the defocus region 20 may not be formed in the center portion of the spectacle lens 100 as shown in FIG. 1. As shown in FIG. 1, for example, this embodiment provides a case where the defocus region 20 is not formed in the center portion of the spectacle lens 100. In this specification, the center portion of the spectacle lens 100 means the center of the lens (geometric center, optical center, or centering center) of the spectacle lens 100 and the vicinity thereof. For example, this embodiment provides a case where the line of sight of the wearer of the spectacle lens 100 passes through the center of the lens when viewed from the front.

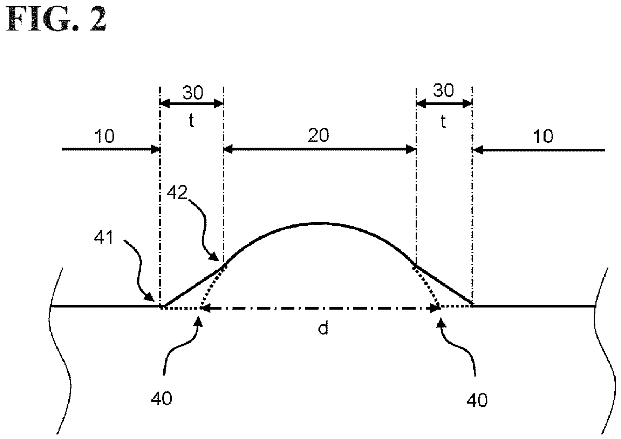

FIG. 2 is an enlarged cross-sectional view around the defocus region 20 in the spectacle lens 100 according to this embodiment. In FIG. 2, the curvature of the base region 10 is subtracted and the base region 10 is shown as a plane for the sake of simplicity. As illustrated in FIG. 2, the transfer region 30 has a predetermined slope and is configured to gradually change a curvature (or slope) between the base region 10 and the defocus region 20. Thereby, the change in curvature becomes more gradual than the change in curvature without providing the transfer region 30, and therefore improvement in spot quality can be expected. This embodiment shows a case where the boundary 40 is assumed to be provided between the base region 10 and the defocus region 20 without providing the transfer region 30, then, the transfer region 30 is provided with equal width inside and outside from this boundary 40.

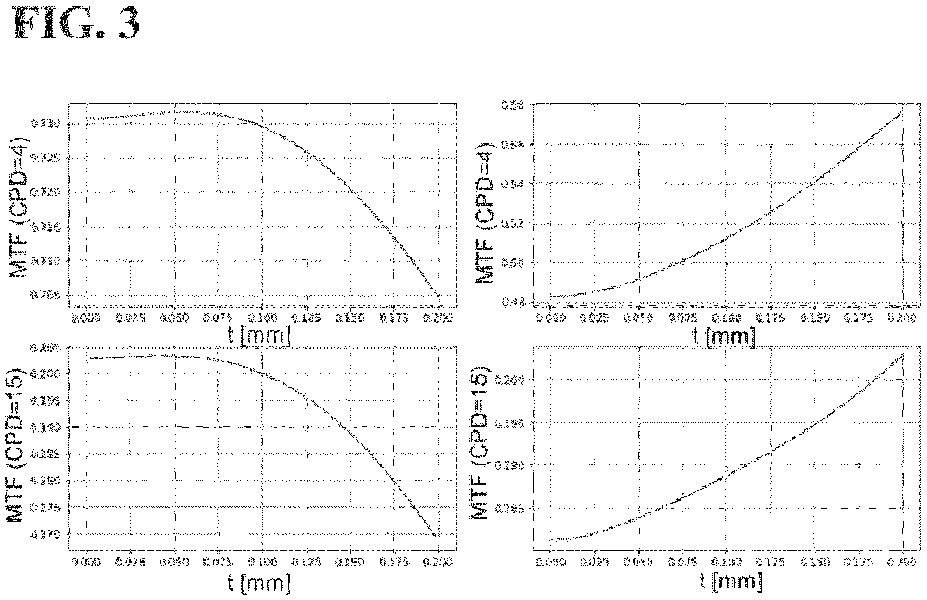

FIG. 3 is a graph showing a relationship between the MTF (Modulation Transfer Function) and the width t of the transfer region 30 at light focusing positions of the base region 10 and defocus region 20 (including the transfer region 30) of the spectacle lens 100 of this embodiment. An upper left graph in FIG. 3 shows low frequency MTF (CPD (Cycle Per Degree) = 4, visual acuity equivalent to 0.15) at the light focusing position of the base region 10, an upper right graph in FIG. 3 shows low frequency MTF (CPD = 4, visual acuity equivalent to 0.15) at a light focusing position of the defocus region 20, a lower left graph in FIG. 3 shows high frequency MTF (CPD = 15, equivalent to visual acuity 0.5) at a light focusing position of the base region 10, and a lower right graph in FIG. 3 shows high frequency MTF (CPD=15, visual acuity equivalent to 0.5) at a light focusing position of the defocus region 20. Hereinafter, the spot quality (the height of the contrast at the light focusing position) will be evaluated based on an MTF value.

When calculating the graph of FIG. 3, the power of the defocus region 20 (relative power with respect to the base region 10) was 3.5D, and the diameter d was 1.0 mm. In this specification, the diameter d of the defocus region 20 is obtained as follows: the boundary 40 between the base region 10 and the defocus region 20 is assumed to be provided without providing the transfer region 30, then, the diameter d is calculated from a distance between these boundaries 40. When obtaining the diameter d of the defocus region 20 from a product itself of the spectacle lens 100, the boundary 40 may be the intersection between the curvature (approximate curvature) near the center of the defocus region 20 and the curvature of the base region 10.

As shown in the upper left and lower left graphs of FIG. 3, the MTF at the light focusing position of the base region 10 shows a tendency to increase once and then decrease as the width t of the transfer region 30 increases. When the width t of the transfer region 30 is too large, the area of the base region 10 is reduced, so the MTF decreases. In contrast, by controlling the width t of the transfer region 30 within a predetermined range, the effect of improving MTF due to the gradual change in curvature exceeds the lowering of MTF due to the area reduction of the base region 10, and therefore the MTF can be improved.

As shown in the upper right and lower right graphs of FIG. 3, the MTF at the light focusing position of the defocus region 20 (including the transfer region 30) improves as the width t of the transfer region 30 increases. This is because as the width t of the transfer region 30 increases, the area of the region regarded as the defocus region 20 increases.

From a viewpoint of improving low frequency MTF, it is preferable that the width t of the transfer region 30 is, for example, 5.0% or more and 8.5% or less of the diameter d of the defocus region 20. As shown in the upper left graph of FIG. 3, when the width t is less than 5.0% of the diameter d (t<0.05 mm), the MTF increases monotonically as the width t increases, and therefore, also from a viewpoint of improving the ease of processing the transfer region 30, it is preferable that the width t is 5.0% or more of the diameter d. Further, as shown in the upper left graph of FIG. 3, when the width t exceeds 8.5% of the diameter d (t>0.085 mm), the MTF may be lowered due to the effect of the area reduction of the base region 10, compared to the case without providing the transfer region 30 (t=0 mm). In contrast, by setting the width t to 8.5% or less of the diameter d, the MTF is not lowered compared to the case without providing the transfer region 30. That is, the MTF and processability at the light focusing position of the defocus region 20 can be improved without any risk.

From a viewpoint of improving both low frequency MTF and high frequency MTF, it is preferable that the width t of the transfer region 30 is, for example, 5.0% or more and 7.0% or less of the diameter d of the defocus region 20. As shown in the lower left graph of FIG. 3, this is because when the width t exceeds 7.0% of the diameter d (t>0.07 mm), the high frequency MTF may be lowered compared to the case without providing the transfer region 30.

FIG. 2 shows a case where the transfer region 30 has a linear slope (that is, the sag amount of the transfer region 30 changes linearly). However, the slope of the transfer region 30 may have R. By adding R to the slope of the transfer region 30 (making it curved), there is a possibility that the change in curvature between the base region 10 and the defocus region 20 can be more gradual. From a viewpoint of efficiently improving the spot quality, for example, the sag amount Z at a midpoint in the width direction of the transfer region 30 is preferably 30% or more and 70% or less of an average value of the sag amount Z1 of the boundary 41 between the base region 10 and the transfer region 30, and the sag amount Z2 of the boundary 42 between the transfer region 30 and the defocus region 20 (that is, (Z1+Z2)/2). In this embodiment, a location where the curvature has changed by 100% or more from the curvature of the base region 10 may be defined as the boundary 41, and a location where the curvature has changed by 100% or more from the curvature of the defocus region 20 may be defined as the boundary 42.

In the spectacle lens 100, the transfer region 30 does not necessarily need to be provided around all the defocus regions 20. From a viewpoint of efficiently improving the spot quality, for example, in the case of a planar view of the object-side surface of the spectacle lens 100, it is preferable that the transfer region 30 is provided around 70% or more (more preferably 80% or more, still more preferably 90% or more) of the defocus region 20 existing within a circumference of a diameter of 20 mm from the center of the lens.

As the lens base material constituting the spectacle lens 100, various commonly used lens base materials can be used. The lens base material may be, for example, a plastic lens base material or a glass lens base material. The glass lens base material may be, for example, the one made of inorganic glass. The plastic lens base material is preferable as the lens base material, from a viewpoint of being lightweight and difficult to break. Examples of the plastic lens base material include styrene resin such as (meth)acrylic resin, allyl carbonate resin such as polycarbonate resin, allyl resin, diethylene glycol bisallyl carbonate resin (CR-39), vinyl resin, polyester resin, polyether resin, urethane resin obtained by a reaction of an isocyanate compound with a hydroxy compound such as diethylene glycol, thiourethane resin made by reacting an isocyanate compound with a polythiol compound, and a cured product (generally called a transparent resin) obtained by curing a curable composition containing a (thio)epoxy compound having one or more disulfide bonds in the molecule. The curable composition may also be referred to as a polymerizable composition. As the lens base material, one that is not dyed (colorless lens) may be used, or one that is dyed (dyed lens) may be used. The thickness and diameter of the lens base material are not particularly limited, but for example, the thickness (center thickness) may be about 1 to 30 mm, and the diameter may be about 50 to 100 mm. The refractive index of the lens base material may be, for example, about 1.60 to 1.75. However, the refractive index of the lens base material is not limited to this range, and may be within this range or vertically away from this range. In this specification, the refractive index refers to the refractive index for light with a wavelength of 500 nm.

A hard coat film containing resin may be formed on at least one main surface of the lens base material constituting the spectacle lens 100. At this time, at least a part of the slope of the transfer region 30 may be formed by the hard coat film. However, from a viewpoint of improving the processing accuracy of the transfer region 30, it is preferable that at least a part of the transfer region 30 is configured to gradually change the curvature between the base region 10 and the defocus region 20 by changing the sag amount of the lens base material. When trying to form the slope of the transfer region 30 using only the hard coat film, liquid pools and the like are likely to occur at the boundary 40, and it may be difficult to control the width t of the transfer region 30 within a predetermined range. In contrast, when at least a part of the slope of the transfer region 30 is formed in advance by the lens base material, even when the hard coat film is formed thereon, the generation of liquid pools and the like can be suppressed and the width t of the transfer region 30 can be easily controlled within a predetermined range. That is, the slope of the transfer region 30 can be formed with high accuracy using the lens base material and the hard coat film.

### (2) Method for designing a spectacle lens

The present invention can also be applied to a method for designing the spectacle lens 100. The method for designing a spectacle lens 100 of this embodiment is the method including: designing a base region 10 that causes a light beam incident from an object-side surface to exit from an eyeball-side surface and converge to a predetermined position (position A) on a retina through an eyeball; designing a plurality of defocus regions 20 that have a property of converging the light beam to a position closer to an object side than the position A (position B), or to a position (position C) closer to an opposite side of the position B as seen from the position A; and designing a transfer region 30 provided at a boundary 40 between the base region 10 and the defocus region 20 to gradually change a curvature between the base region 10 and the defocus region 20. Details of the base region 10, defocus region 20, and transfer region 30 designed in each step are omitted because the description overlaps with the above-described (1) spectacle lens.

### <Second embodiment of the present invention>

Next, a second embodiment of the present invention will be described, focusing on the differences from the first embodiment. Elements that are substantially the same as those described in the first embodiment are given the same reference numerals, and their explanations will be omitted.

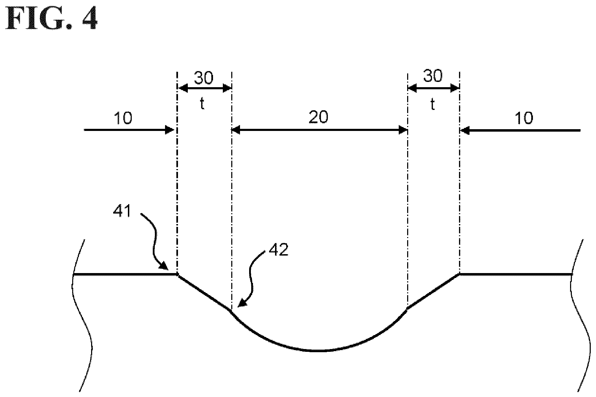

The present invention is applicable not only to a lens that suppresses the progression of myopia but also to a lens that suppresses the progression of hyperopia. FIG. 4 is an enlarged sectional view around the defocus region 20 of the spectacle lens 100 according to a second embodiment of the present invention. In FIG. 4, the curvature of the base region 10 is subtracted and the base region 10 is shown as a plane for the sake of simplicity. As illustrated in FIG. 4, the defocus region 20 of this embodiment is an appearance of a minute recess. Also in this embodiment, as in the first embodiment described above, the transfer region 30 is provided around the defocus region 20, and the transfer region 30 is configured to gradually change the curvature between the base region 10 and the defocus region 20. Thereby, the spot quality can be improved similarly to the first embodiment.

The width t of the transfer region 30 in this embodiment is preferably 5.0% or more and 8.5% or less of the diameter d of the defocus region 20 for the same reason as in the first embodiment. Also, for the same reason as in the first embodiment, the sag amount Z at the midpoint in the width direction of the transfer region 30 of this embodiment is preferably 30% or more and 70% or less of the average value of the sag amount Z1 of the boundary 41 between the base region 10 and the transfer region 30 and the sag amount Z2 of the boundary 42 between the transfer region 30 and the defocus region 20 (that is, (Z1+Z2)/2). Also, for the same reason as in the first embodiment, it is preferable that at least a part of the transfer region 30 of this embodiment is configured to gradually change the curvature between the base region 10 and the defocus region 20 by changing the sag amount of the lens base material.

### <Other embodiments of the present invention>

The embodiments of the present invention have been specifically described above. However, the present invention is not limited to the above-described embodiments, and can be modified in various ways without departing from the gist thereof.

For example, in the embodiment described above, explanation is given for the case where at least a part of the transfer region 30 is configured to gradually change the curvature between the base region 10 and the defocus region 20 by changing the sag amount of the lens base material, but the slope of the transfer region 30 may be formed using only the hard coat film without changing the sag amount of the lens base material. In this case, there is no need to change a mold for forming the lens base material from that of a reference example. However, from a viewpoint of improving the processing accuracy of the transfer region 30, as in the embodiments described above, it is preferable that at least a part of the slope of the transfer region 30 is formed by the lens base material.

### Examples

Next, examples according to the present invention will be described. These examples are examples of the present invention, and the present invention is not limited by these examples.

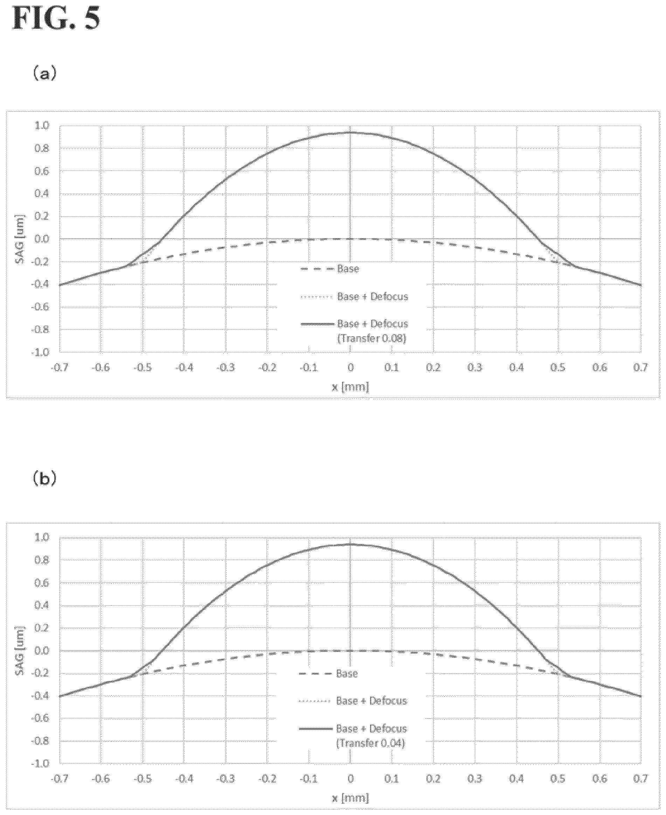

Sample 1 of the spectacle lens 100 was designed under the following conditions. The base region 10 and the defocus region 20 had a spherical shape, and the slope of the transfer region 30 was shown as a straight line. FIG. 5(a) shows the change in the sag amount of the defocus region 20 of Sample 1.
Refractive index of lens base material: 1.6D
Power of base region 10: 1D
Power of defocus region 20 (relative power with respect to base region 10): 3.5D
Diameter d of defocus region 20: 1.0 mm
Width t of transfer region 30: 0.08mm

Further, Sample 2 of the spectacle lens 100 was designed in the same manner as Sample 1, except that the width t of the transfer region 30 was 0.065 mm.

Further, Sample 3 of the spectacle lens 100 was designed in the same manner as Sample 1, except that the width t of the transfer region 30 was 0.04 mm. FIG. 5(b) shows the change in the sag amount of the defocus region 20 of Sample 3.

Further, Sample 4 of the spectacle lens 100 was designed in the same manner as Sample 1, except that the transfer region 30 was not provided.

For Samples 1 to 4, MTF at each light focusing position of the base region 10 and defocus region 20 was calculated. The low frequency MTF (CPD = 4, visual acuity equivalent to 0.15) at the light focusing position of the base region 10 was 73.1% for Sample 1, 73.2% for Sample 2, 73.2% for Sample 3, and 73.1% for Sample 4. The high frequency MTF at the light focusing position of the base region 10 (CPD = 15, visual acuity equivalent to 0.5) was 20.2% for Sample 1, 20.3% for Sample 2, 20.4% for Sample 3, and 20.3% for Sample 4. The low frequency MTF at the light focusing position of the defocus region 20 (CPD = 4, visual acuity equivalent to 0.15) was 50.5% for Sample 1, 49.6% for Sample 2, 49.0% for Sample 3, and 48.3% for Sample 4. Further, the high frequency MTF at the light focusing position of the defocus region 20 (CPD = 15, visual acuity equivalent to 0.5) was 18.7% for Sample 1, 18.5% for Sample 2, 18.3% for Sample 3, and 18.1% for Sample 4. That is, it was confirmed that by providing the transfer region 30, there was almost no drop in MTF at the light focusing position of the base region 10 (other than 0.1% drop of high frequency in Sample 1), and an improvement was obtained in MTF at the light focusing position of the defocus region 20.

As described above, it was confirmed that by providing the transfer region 30, the spot quality could be improved. When forming a hard coat film on the lens base material, the width t of the transfer region 30 may become larger than a designed value of the lens base material, due to the hard coat film. Therefore, in some cases, as in Sample 3, it is preferable to design the width t of the transfer region 30 to be smaller (for example, less than 5.0% of the diameter d of the defocus region 20).

### Description of signs and numerals

- 10: Base region
- 20: Defocus region
- 30: Transfer region
- 40: Boundary (between base region 10 and defocus region 20)
- 41: Boundary (between base region 10 and transfer region 30)
- 42: Boundary (between transfer region 30 and defocus region 20)
- 100: Spectacle lens

## Claims

1. A spectacle lens, comprising:
a base region that causes a light beam incident from an object-side surface to exit from an eyeball-side surface and converge to a predetermined position A on a retina through an eyeball;
a plurality of defocus regions having a property of converging a light beam to a position B closer to an object side than the position A, or a position C closer to an opposite side of the position B as seen from the position A; and
a transfer region provided at a boundary between the base region and the defocus region to gradually change a curvature between the base region and the defocus region.

2. The spectacle lens according to claim 1, wherein a width of the transfer region is 5.0% or more and 8.5% or less of a diameter of the defocus region.

3. The spectacle lens according to claim 1 or 2, wherein at least a part of the transfer region is configured to gradually change the curvature between the base region and the defocus region by changing a sag amount of a lens base material.

4. The spectacle lens according to any one of claims 1 to 3, wherein a sag amount Z at a midpoint in a width direction of the transfer region is 30% or more and 70% or less of an average value of a sag amount Z1 at a boundary between the base region and the transfer region, and a sag amount Z2 at a boundary between the transfer region and the defocus region.

5. The spectacle lens according to any one of claims 1 to 4, wherein a spectacle lens is a lens that suppresses a progression of myopia.

6. A method for designing a spectacle lens, the method comprising:
designing a base region that causes a light beam incident from an object-side surface to exit from an eyeball-side surface and converge to a predetermined position A on a retina through an eyeball;
designing a plurality of defocus regions having a property of converging a light beam to a position B closer to an object side than the position A, or a position C closer to an opposite side of the position B as seen from the position A; and
designing a transfer region provided at a boundary between the base region and the defocus region to gradually change a curvature between the base region and the defocus region.
